# FASCICULE DE BREVET EUROPEEN

(11) **EP 1 192 590 B1**
(45) Date de publication et mention de la délivrance du brevet: **27.08.2003**
(21) Numéro de dépôt: 00925429.3
(22) Date de dépôt: 11.05.2000
(51) Int. Cl.: G06K 19/077

(54) **PROCEDE DE FABRICATION D'UNE CARTE SANS CONTACT**
VERFAHREN ZUR HERSTELLUNG EINER KONTAKTLOSEN KARTE
METHOD FOR PRODUCING A CONTACTLESS CARD

(30) Priorité: 12.05.1999 FR 9906535
(43) Date de publication de la demande: 03.04.2002
(73) Titulaire: Gemplus, 13881 Gémenos Cedex (FR)
(72) Inventeur: BERTRAND, Pierre, F-13200 Cassis (FR)
(86) Numéro de dépôt international: FR0001263
(87) Numéro de publication internationale: WO00070555

(56) Documents cités:
- EP-A- 0 476 636
- EP-A- 0 886 239
- US-A- 5 387 306

## Description

La présente invention concerne la fabrication de supports à circuit intégré du type sans contact tels qu'étiquettes électroniques ou cartes dites "sans contact" du fait de leur aptitude à échanger des informations à distance avec un lecteur suivant un mode lecture ou bien un mode écriture/lecture.

De telles cartes sont notamment des badges d'identification, ou bien des cartes à puce à fonctions plus étendues dont les applications se multiplient actuellement. Par exemple, dans une telle application dénommée "télébilletique", la carte est débitée au passage à proximité d'une borne et peut être de même rechargée à distance. En règle générale, la transmission des données est effectuée par radiofréquence ou hyperfréquence.

Dans un procédé connu de fabrication d'une carte sans contact, est mise en oeuvre la technique dite de "colamination". Elle consiste ici à disposer entre les plateaux d'une presse un empilement de feuilles thermoplastiques au milieu duquel est positionné le circuit électronique pour transmission sans contact ; puis à effectuer le soudage des différentes feuilles thermoplastiques par pression et élévation de la température. Ce procédé permet d'obtenir une carte dont toute l'électronique est noyée dans la matière plastique. Mais du fait des différences entre les coefficients de dilatation, des divers matériaux utilisés, l'action combinée de la pression et de la température engendre une déformation résiduelle à la surface de la carte. Et le remède à cette déformation est très pénalisant en production, puisqu'il consiste à allonger sensiblement les temps de cycle; notamment le refroidissement. Un autre inconvénient de ces cartes est leur médiocre aptitude à résister à des sollicitations en flexion répétees.

Le document US-5,387,306 décrit la fabrication d'une carte à puce comprenant l'intégration d'une feuille support entre deux feuilles extérieures. Une résine et un durcisseur sont injectés dans un tube plat formé par des revêtements recouvrant les deux faces d'une couche médiane comprenant une puce et une antenne. L'ensemble est ensuite maintenu dans un moule de formage le temps que la résine durcisse.

Le document EP-0,476,636 décrit la fabrication d'un élément destiné à être rapporté sur une carte. Cet élément est un panneau, tel une étiquette, destiné à recevoir une signature. II est formé d'une couche de papier sur laquelle est apposée la signature et d'une couche de résine thermoplastique destinées à leur jonction sur le corps de la carte de destination.

Dans le document EP-A-0 640 940 au nom de N.V. Nederlandsche Apparentfabriek NEDAP reflétant l'état de la technique le plus proche, il est proposé une solution à ce double problème selon laquelle une couche intermédiaire à fonction de support pour les moyens fonctionnels de la carte est interposée entre deux couches superficielles, chacune de ces dernières étant fixée à la couche intermédiaire par une couche de liaison ayant une température de ramollissement plus basse. Ce procédé a toutefois le désavantage de comporter un grand nombre d'étapes et donc d'être de mise en oeuvre assez complexe.

La présente invention procède d'une recherche d'une nouvelle solution de fabrication de supports à circuit intégré du type sans contact pour surmonter les problèmes précités, en même temps que pour satisfaire à d'autres objectifs d'automatisation de la fabrication et de production en grande série à cadence élevée.

A cet effet, l'invention consiste en un procédé de fabrication d'un support de circuit intégré du type sans contact, pourvu d'éléments fonctionnels comprenant un bloc électronique ou puce relié à un enroulement à fonction d'antenne, et dont le corps comprend une couche de revêtement sur au moins un côté desdits éléments fonctionnels, caractérisé en ce que lesdits moyens fonctionnels sont implantés sur une feuille de support, et en ce que ladite couche de revêtement au moins est formée par extrusion, immédiatement au contact de ladite feuille de support.

Dans le cas préférentiel où sont extrudées deux couches de revêtement, une sur chaque côté de ladite feuille de support, il est donc obtenu un corps intégrant les composants électronique, et d'alimentation et transmission du système, lesquels composants sont entièrement noyés dans ledit corps.

Dans une forme de réalisation de l'invention, ladite feuille de support desdits moyens fonctionnels est un film en matériau diélectrique. En variante, elle est une grille ou section de bande conductrice (de type "lead frame"), dans laquelle peut être découpé ledit enroulement sous forme d'une ou plusieurs spires.

Selon une autre caractéristique de l'invention, ledit procédé de fabrication est mis en oeuvre en faisant passer ladite feuille de support, pourvue au préalable desdits moyens fonctionnels, dans une filière d'extrusion de ladite couche de revêtement au moins. Si deux couches de revêtement sont prévues, elles sont avantageusement réalisées ensemble par co-extrusion sur les deux côtés de ladite feuille de support.

Dans les deux cas, dans une étape préliminaire du procédé de fabrication, ladite feuille de support, pourvue desdits éléments fonctionnels de carte, est avantageusement conditionnée sous forme de bobine à dérouler en continu en vue d'une mise en oeuvre en continu de l'étape d'extrusion ou de co-extrusion, suite à laquelle, après refroidissement, peuvent avoir lieu en ligne une étape d'impression et/ou de découpe au format final, et/ou de test des produits, et/ou de dépôt sur le recto et/ou le verso de film imprimé, piste magnétique ou autres.

Selon une autre caractéristique de l'invention, l'étape de découpe comprend une phase préalable de repérage, en vue du positionnement pour la découpe proprement dite, le repérage consistant en une détection desdits moyens fonctionnels à travers la matière dont ils sont recouverts (par exemple par radio, ultrasons, etc.). Cette façon de procéder est particulièrement avantageuse lorsqu'il est prévu que ladite feuille de support soit totalement noyée dans la matière venant d'extrusion.

Dans le cas où ladite feuille de support est un film en matériau diélectrique constituant une âme centrale entre deux couches de revêtement obtenues par co-extrusion, il est avantageusement prévu une ou plusieurs ouvertures dans ladite âme centrale de la carte, de manière à ce que lesdites couches inférieure et supérieure soient co-extrudées en étant jointes l'une à l'autre de façon monolithique.

La présente invention concerne donc également un support à circuit intégré du type sans contact, tel que carte à puce, comportant une feuille centrale de support de moyens fonctionnels, et des couches inférieure et supérieure, caractérisé en ce que ladite feuille centrale de support présente au moins une ouverture au travers de laquelle communiquent les couches inférieure et supérieure. Dans un tel ensemble, la matière des couches inférieure et supérieure présente avec la matière se trouvant dans ladite ouverture au moins une continuité moléculaire homogène et constitutive d'un seul et même matériau, lesdites couches inférieure et supérieure étant obtenues par extrusion.

D'autres caractéristiques de l'invention sont relatives à la réalisation et/ou au montage des éléments fonctionnels (bobine d'alimentation et antenne sous la forme d'un enroulement, et bloc électronique ou puce), sur un film en matériau diélectrique en tant que feuille de support centrale, selon lesquelles, avantageusement :
- ledit enroulement est réalisé par métallisation dudit film ;
- la puce est collée sur ledit film, et ses contacts sont reliés, avantageusement par soudure, à deux fils de connexion audit enroulement, l'ensemble de la puce et des fils de connexion étant noyé dans une goutte de résine ;
- ces deux opérations sont réalisées en continu sur ledit film en matériau diélectrique conditionné à cet effet en bobine à dérouler en continu.

Ces caractéristiques et avantages de l'invention, ainsi que d'autres, apparaîtront plus clairement à la lecture de la description suivante, faite en relation avec les dessins joints, dans lesquels :
la Fig. 1 est une vue schématique en coupe illustrant dans son principe un dispositif d'extrusion utilisé dans une forme de mise en oeuvre du procédé selon l'invention,
les Figs. 2 et 3 sont des vues en plan similaires d'une portion de film destinée à constituer l'âme centrale d'une carte fabriquée selon l'invention, et pourvue des éléments fonctionnels de la carte, et
la Fig. 4 est une vue schématique en coupe du détail inscrit dans un cercle aux Figs. 2 et 3, illustrant le montage de la puce sur ladite âme centrale et sa connexion à l'enroulement à fonctions de bobine d'alimentation et d'antenne.

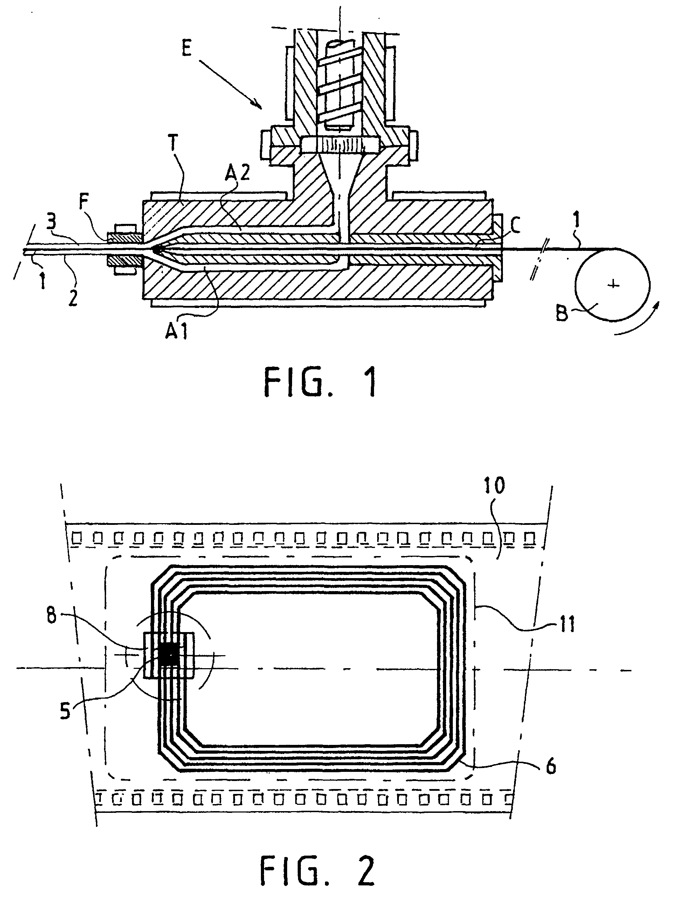

Considérant d'abord la Fig. 1, elle illustre dans le procédé de fabrication selon l'invention d'une carte sans contact, sous forme de dispositif, l'étape de réalisation de deux couches inférieure et supérieure 2 et 3 recouvrant une âme centrale 1 pourvue au préalable des éléments fonctionnels de la carte qui, selon les cas, peuvent être implantés dans des positions variables de celle-ci. Les couches 2 et 3 protègent l'ensemble de l'âme 1 et de ses composants et, en règle générale, elles sont imprimées lors d'une étape ultérieure du procédé.

Selon l'invention, les deux couches inférieure et supérieure 2 et 3 sont réalisées par extrusion, directement sur l'âme 1. Dans l'exemple représenté, elles sont obtenues simultanément par la technique bien connue d'extrusion de plaque, du fait de faire défiler l'âme 1 préalablement équipée en composants à travers la filière F du dispositif d'extrusion E.

A cet effet, la tête d'alimentation T de la filière F consiste en un bloc dans lequel sont ménagés un canal C de passage de l'âme 1, aboutissant à l'entrée de la filière F, ainsi que deux conduites A1 et A2 d'amenée de la matière à extruder débouchant respectivement inférieurement et supérieurement dans le canal C, immédiatement en amont de l'entrée de la filière F. On obtient ainsi en sortie de la filière F un stratifié dont l'épaisseur et l'aspect des deux couches extérieures 2 et 3 extrudées peuvent être parfaitement contrôlés d'une manière connue en soi. Pour renforcer la liaison entre les couches extrudées 2, 3 et l'âme centrale 1, celle-ci peut être enduite d'un adhésif approprié avant passage dans le dispositif d'extrusion E.

Sur le dessin, l'âme 1 apparaît conditionnée sous la forme d'une bobine B à dérouler en continu, en vue d'une alimentation en continu du dispositif d'extrusion E et, par conséquent, d'une production en sortie d'un ruban continu de stratifié qui peut subir en l'état des traitements ultérieurs tels que refroidissement et impression, les cartes n'étant formées qu'au final par découpe dans ce ruban.

En pratique, des matières à extruder classiques peuvent être utilisées, telles que polyéthylène-téraphtalate (PET) ou polychlorure de vinyle, etc. , sélectionnées en fonction des matériaux constituant l'âme centrale 1 et les éléments fonctionnels des cartes à réaliser.

La Fig. 2 illustre une étape préalable dans la forme de mise en oeuvre préférée du procédé selon l'invention, relative à la préparation de l'âme centrale 1, qui apparaît ici en tant que partie d'un film 10 déroulé d'une bobine telle que B à la Fig. 1.

Sur le film 10, sont formés successivement des mêmes arrangements de circuit correspondant chacun à l'équipement fonctionnel d'une carte, et regroupant donc une puce 5 et un enroulement 6 à fonction de bobine d'alimentation et d'antenne.

L'enroulement 6 est avantageusement réalisé de façon classique par métallisation du diélectrique constituant le film 10, soit par gravure chimique ou bien contrecollage du métal, ou encore impression sérigraphique.

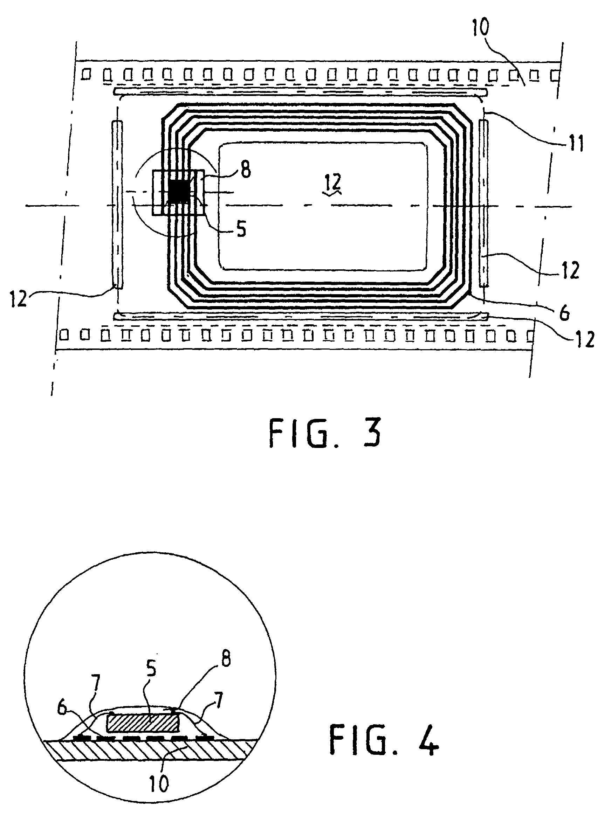

Le montage de la puce 5 sur le film 10 est illustré à la Fig. 4 : la puce 5 est d'abord collée sur le film 10, puis ses contacts sont reliés aux extrémités de l'enroulement 6, notamment par soudure en extrémité de fils de connexion 7. L'ensemble de la puce 5 et des fils de connexion 7 peut être ensuite noyé dans une goutte de résine 8. Toutes ces opérations relatives à la puce 5 et l'enroulement 6 peuvent donc être réalisées en ligne, de façon très largement, sinon complètement automatisée. Dans une forme plus simple, l'enroulement 6 peut faire partie intégrante du bloc électronique 5, ce qui réduit l'opération de montage à la simple fixation de celui-ci sur le film 10.

A la Fig. 2, apparaît en outre sur le film 10, un pourtour 11 en traits mixtes-fins entourant l'ensemble fonctionnel constitué par la puce 5 et de l'enroulement 6, et qui indique la coupe qui sera effectuée au final au format du produit final à obtenir. Notamment dans le cas où l'âme centrale est totalement noyée dans la matière extrudée, la découpe est avantageusement opérée suite à un repérage par détection des moyens 5, 6 à travers la matière (par exemple par radio, ultrasons, etc.).

La Fig. 3 est pour l'essentiel identique à la Fig. 2 et comporte par conséquent les mêmes signes de référence pour désigner les mêmes éléments. Ont été seulement représentés en plus des évidements 12 ménagés dans le film 10 à l'emplacement de chaque future carte, avant ou après l'agencement des ensembles d'équipement 5, 6. Les évidements 12 sont prévus en tant que passage de communication entre le recto et le verso du film 10, qui vont donc permettre à la matière d'extrusion de se répartir sans interruption de continuité autour du film, constituant donc les couches superficielles 2 et 3 jointes entre elles de façon monolithique. En prévoyant en plus d'un évidemment central, des évidements longitudinaux et transversaux à cheval sur le pourtour de découpe 11, on peut obtenir un corps de carte formant une enveloppe quasi-continue, sauf en une partie minime du pourtour.

Outre de par les avantages de la mise en oeuvre du procédé de fabrication ressortant de la description qui précède, l'invention est remarquable également au niveau du produit qui en résulte, dont les moyens fonctionnels sont entièrement protégés dans une gaine en matière plastique, dont la sécurisation est maximale puisqu'il ne peut y avoir d'accès physique aux circuits électronique sans destruction du corps de carte, et dont la surface imprimable est augmentée.

## Revendications

1. Procédé de fabrication de supports de circuit intégré du type sans contact, tels que cartes à puce sans contact, pourvu d'éléments fonctionnels comprenant un bloc électronique (5) relié à un enroulement (6) à fonction d'antenne, et dont le corps comprend une couche de revêtement sur au moins un côté desdits éléments fonctionnels, **caractérisé en ce que** lesdits moyens fonctionnels (5, 6) sont implantés sur une feuille de support, et **en ce que** ladite couche de revêtement au moins est formée par extrusion, immédiatement au contact de ladite feuille de support.

2. Procédé selon la revendication 1, **caractérisé en ce que** ladite feuille de support est une grille conductrice dans laquelle est formé ledit enroulement (6).

3. Procédé de selon la revendication 1 ou 2, **caractérisé en ce qu'**il est mis en oeuvre en faisant passer ladite feuille de support pourvue au préalable desdits moyens fonctionnels (5, 6) dans une filière (F) d'extrusion de ladite couche de revêtement (2 et/ou 3).

4. Procédé selon la revendication 3, **caractérisé en ce que** ladite feuille de support, pourvue desdits éléments fonctionnels (5, 6), est conditionnée sous forme de bobine (B) à dérouler en continu en vue d'une mise en oeuvre en continu de l'étape d'extrusion.

5. Procédé selon la revendication 4, **caractérisé en ce que** suite à l'étape d'extrusion et après refroidissement, ont lieu en ligne une étape d'impression et/ou une étape de découpe au format final des produits à obtenir.

6. Procédé selon la revendication 5, **caractérisé en ce qu'**il comprend une étape de découpe au format final des produits dans laquelle est prévue pour le positionnement nécessaire à la découpe proprement dite, une phase de repérage préalable par détection desdits moyens fonctionnels (5, 6) au travers de la matière dont ils sont recouverts.

7. Procédé selon l'une des revendications 4 à 6, **caractérisé en ce que** suite à l'étape d'extrusion, a lieu en ligne une étape pour le dépôt d'un film imprimé sur le recto et/ou le verso des produits à obtenir.

8. Procédé selon l'une des revendications 1 et 3 à 7, **caractérisé en ce qu'**il est prévu en tant que feuille de support desdits éléments fonctionnels (5, 6), un film en matériau diélectrique (1).

9. Procédé selon la revendication 8, **caractérisé en ce que** sont prévues deux couches inférieure (1) et supérieure (2) de revêtement du film en diélectrique (1) formant âme centrale entre les deux, et **en ce qu'**il est en outre prévu une ou plusieurs ouvertures (12) dans ladite âme centrale de la carte, de manière à ce que lesdites couches inférieure et supérieure (2, 3) soient co-extrudées en étant jointes l'une à l'autre de façon monolithique.

10. Procédé selon la revendication 8 ou 9, **caractérisé en ce que** préalablement à l'étape d'extrusion des couches (2, 3), un enroulement (6) à fonctions d'antenne et de bobine d'alimentation pour la puce (5) est réairisé par métallisation sur l'âme (1).

11. Procédé selon la revendication 10, **caractérisé en ce que** la puce (5) est collée sur ladite âme centrale, et ses contacts sont reliés à deux fils (7) de connexion audit enroulement (6), l'ensemble de la puce (5) et des fils de connexion (7) étant noyé dans une goutte de résine (8).

12. Procédé selon la revendication 11, **caractérisé en ce que** les deux opérations de réalisation de l'enroulement (6) et de montage de la puce (5) sont réalisées en continu sur un film (10) conditionné en bobine (B) à dérouler en continu et constituant ladite âme centrale.

13. Support de circuit intégré du type sans contact, tel que carte à puce sans contact, obtenu par le procédé selon l'une des revendications 1 à 12.

14. Support de circuit intégré de type sans contact, tel que carte à puce sans contact, comportant une feuille centrale (1) de support de moyens fonctionnels (5, 6), et des couches inférieure et supérieure (2, 3), **caractérisé en ce que** ladite feuille centrale de support (1) présente au moins une ouverture (12) au travers de laquelle communiquent les couches inférieure (2) et supérieure (3), la matière des couches inférieure et supérieure (2, 3) présentant avec la matière se trouvant dans ladite ouverture (12) au moins une continuité moléculaire homogène et constitutive d'un seul et même matériau, lesdites couches inférieure (2) et supérieure (3) étant obtenues par extrusion.

## Patentansprüche

1. Herstellungsverfahren eines kontaktlosen IC-Trägers, wie beispielsweise kontaktlose Chipkarten, ausgestattet mit funktionellen Elementen umfassend einen Elektronikblock (5), angeschlossen an eine als Antenne dienende Wicklung (6), und dessen Körper eine Beschichtungsschicht auf mindestens einer Seite der besagten funktionellen Elemente umfasst, **dadurch gekennzeichnet, dass** die besagten funktionellen Mittel (5, 6) auf einer Trägerfolie angeordnet sind, und dass die besagte zumindest eine Beschichtungsschicht per Extrusion gebildet wird, in unmittelbarem Kontakt mit der besagten Trägerfolie.

2. Verfahren nach Anspruch 1, **dadurch gekennzeichnet, dass** die besagte Trägerfolie ein leitendes Gitter ist, in dem die besagte Wicklung (6) ausgebildet ist.

3. Verfahren nach Anspruch 1 oder 2, **dadurch gekennzeichnet, dass** es umgesetzt wird, indem man die besagte, zuvor mit den besagten funktionellen Mitteln (5, 6) bestückte Trägerfolie durch ein Spritzmundstück (F) der besagten Beschichtungsschicht (2 und/oder 3) laufen lässt.

4. Verfahren nach Anspruch 3, **dadurch gekennzeichnet, dass** die besagte, mit den besagten funktionellen Elementen (5, 6) ausgestattete Trägerfolie in Form einer kontinuierlich abzuwickelnden Spule (B) ausgebildet ist, für eine kontinuierliche Umsetzung des Extrusionsschritts.

5. Verfahren nach Anspruch 4, **dadurch gekennzeichnet, dass** nach dem Extrusionsschritt und nach der Abkühlung in Reihe ein Druck- und/oder Stanzschritt auf das Endformat der zu erhaltenden Produkte stattfindet.

6. Verfahren nach Anspruch 5, **dadurch gekennzeichnet, dass** es einen Stanzschritt auf das Endformat der Produkte umfasst, bei dem für die Positionierung des eigentlichen Ausschnitts, eine vorherige Markierungsphase durch Erfassung der besagten funktionellen Mittel (5, 6) durch das Material hindurch umfasst, mit dem sie überzogen sind.

7. Verfahren nach einem der Ansprüche 4 bis 6, **dadurch gekennzeichnet, dass** nach dem Extrusionsschritt ein kontinuierlicher Schritt für die Ablagerung einer bedruckten Folie auf der Vorder- und/oder der Rückseite der zu erhaltenden Produkte stattfindet.

8. Verfahren nach einem der Ansprüche 1 und 3 bis 7, **dadurch gekennzeichnet, dass** als Trägerfolie der besagten funktionellen Mittel (5, 6) eine Folie aus dielektrischem Material (1) vorgesehen ist.

9. Verfahren nach Anspruch 8, **dadurch gekennzeichnet, dass** eine untere (1) und eine obere (2) Beschichtungsschicht der dielektrischen Folie (1) vorgesehen sind, die zwischen sich eine mittlere Seele bilden, und dass ferner eine oder mehrere Öffnungen (12) in der besagten mittleren Seele der Karte vorgesehen sind, so dass die besagte untere und obere Schicht (2, 3) koextrudiert werden, wobei sie monolithisch miteinander verbunden sind.

10. Verfahren nach Anspruch 8 oder 9, **dadurch gekennzeichnet, dass** vor dem Extrusionsschritt der Schichten (2, 3) eine als Antenne und Versorgungsspule für den Chip (5) dienende Wicklung (6) durch Metallisierung auf der Seele (1) hergestellt wird.

11. Verfahren nach Anspruch 10, **dadurch gekennzeichnet, dass** der Chip (5) auf die besagte mittlere Seele geklebt wird und seine Kontakte mit zwei Anschlussdrähten an der besagten Wicklung (6) angeschlossen werden, wobei die aus dem Chip (5) und den Anschlussdrähten (7) bestehende Baugruppe in einen Harztropfen (8) eingebettet werden.

12. Verfahren nach Anspruch 11, **dadurch gekennzeichnet, dass** die beiden Operationen, d.h. die Herstellung der Wicklung (6) und die Montage des Chips (5), kontinuierlich auf einer Folie (10) durchgeführt werden, die als eine kontinuierlich abzuwickelnde und die besagte Seele darstellende Spule (B) ausgebildet ist.

13. IC-Träger des Typs kontaktlos, wie beispielsweise eine kontaktlose Chipkarte, der nach dem Verfahren gemäß einem der Ansprüche 1 bis 12 hergestellt wird.

14. IC-Träger des Typs kontaktlos, wie beispielsweise eine kontaktlose Chipkarte, mit einer mittleren Trägerfolie (1) für funktionelle Mittel (5, 6) und mit einer unteren und oberen Schicht (2, 3), **dadurch gekennzeichnet, dass** die besagte mittlere Trägerfolie (1) mindestens eine Öffnung (12) aufweist, über die die untere (2) und obere (3) Schicht miteinander in Verbindung stehen, wobei das Material der unteren und der oberen Schicht (2, 3) mit dem sich in der besagten Öffnung (12) befindlichen Material zumindest eine homogene molekulare Kontinuität aus demselben Material aufweist, wobei die besagte untere (2) und obere (3) Schicht per Extrusion erhalten werden.

## Claims

1. A method for manufacturing integrated circuit supports of the contactless type, such as contactless smart cards, provided with functional elements comprising an electronic unit (5) connected to a winding (6) with an antenna function, and the body of which comprises a coating layer over at least one side of said functional elements, **characterised in that** said functional means (5, 6) are laid out on a support sheet, and **in that** said coating layer at least is formed by extrusion, immediately in contact with said support sheet.

2. A method according to Claim 1, **characterised in that** said support sheet is a conductive grid in which said winding (6) is formed.

3. A method according to Claim 1 or 2, **characterised in that** it is implemented by passing said support sheet, provided beforehand with said functional means (5, 6), into a die (F) for extruding said coating layer (2 and/or 3).

4. A method according to Claim 3, **characterised in that** said support sheet, provided with said functional elements (5, 6), is packaged in the form of a continuously unwinding roll (B) with a view to continuous implementation of the extrusion step.

5. A method according to Claim 4, **characterised in that**, following the extrusion step and after cooling, there take place in-line a step of printing and/or a step of cutting to the final format of the products to be obtained.

6. A method according to Claim 5, **characterised in that** it comprises a step of cutting to the final format of the products, in which there is provided, for the positioning necessary for the actual cutting out, a prior phase of location by detection of said functional means (5, 6) through the material with which they are covered.

7. A method according to one of Claims 4 to 6, **characterised in that**, following the extrusion step, there takes place in-line a step for the deposition of a printed film on the front and/or the back of the products to be obtained.

8. A method according to one of Claims 1 and 3 to 7, **characterised in that** there is provided, as a support sheet for said functional elements (5, 6), a film made of dielectric material (1).

9. A method according to Claim 8, **characterised in that** two layers, lower (1) and upper (2), are provided for coating the dielectric film (1) forming a central core sheet between the two, and **in that** one or more openings (12) are also provided in said central core sheet of the card, so that said lower and upper layers (2, 3) are co-extruded while being attached to one another monolithically.

10. A method according to Claim 8 or 9, **characterised in that**, prior to the step of extruding the layers (2, 3), a winding (6) with antenna and power supply coil functions for the chip (5) is produced by metallisation on the core sheet (1).

11. A method according to Claim 10, **characterised in that** the chip (5) is stuck onto said central core sheet, and its contacts are connected to two wires (7) for connection to said winding (6), the assembly of the chip (5) and the connection wires (7) being embedded in a drop of resin (8).

12. A method according to Claim 11, **characterised in that** the two operations of producing the winding (6) and mounting the chip (5) are carried out continuously on a film (10) packaged on a continuously unwinding roll (B) and constituting said central core sheet.

13. An integrated circuit support of the contactless type, such as a contactless smart card, obtained by the method according to one of Claims 1 to 12.

14. An integrated circuit support of the contactless type, such as a contactless smart card, comprising a central support sheet (1) for functional means (5, 6), and lower and upper layers (2, 3), **characterised in that** said central support sheet (1) has at least one opening (12) through which the lower (2) and upper (3) layers communicate, the material of the lower and upper layers (2, 3) having with the material situated in said opening (12) at least a homogeneous molecular continuity and constituting one and the same material, said lower (2) and upper (3) layers being obtained by extrusion.
